# EUROPEAN PATENT SPECIFICATION

(11) **EP 1 073 873 B1**
(45) Date of publication and mention of the grant of the patent: **11.02.2004**
(21) Application number: 99918771.9
(22) Date of filing: 21.04.1999
(51) Int. Cl.: F28D 7/02, E21B 43/26

(54) **MULTIPHASE HEAT EXCHANGER**
MEHRPHASEN-WÄRMETAUSCHER
ECHANGEUR THERMIQUE POLYPHASE

(30) Priority: 21.04.1998 US 63603; 01.07.1998 US 108710
(43) Date of publication of application: 07.02.2001
(73) Proprietor: Vita International, Inc., Houston, TX 77038 (US)
(72) Inventor: BODHAINE, James, Houston, TX 77070 (US); HASSANEIN, Hany, E., Houston, TX 77086 (US)
(74) Representative: Frankland, Nigel Howard
(86) International application number: PCT/US1999/008816
(87) International publication number: WO 1999/054675

(56) References cited:
- EP-A- 0 805 303
- WO-A-82/00053
- DE-A- 1 601 222
- DE-A- 1 936 782
- DE-A- 2 708 377
- DE-A- 3 117 431
- FR-A- 1 192 240
- FR-A- 2 479 436
- FR-A- 2 660 056
- US-A- 1 922 149
- US-A- 4 420 942
- GEORGIEV,KOVATCHEV: "multichannel low temperature heat exchanger" CRYOGENICS., vol. 14, no. 1, January 1974 (1974-01), pages 25-28, XP002114805 IPC SCIENCE AND TECHNOLOGY PRESS LTD. GUILDFORD., GB ISSN: 0011-2275

## Description

### Field of the Invention

This invention relates to a multiphase heat exchanger that provides radial thermal heat transfer between a plurality of individually contained fluids as defined in the preamble of claim 1. Such a heat exchanger is known for instance from US-A-1 279 135.

### Background of the Related Art

Numerous operations are performed on oil and gas wells which require large volumes of nitrogen gas or other cryogenic fluids. These operations may be performed on both onshore and offshore wells. Such operations include foam fracturing operations, acidizing services, jetting down the tubing or down the tubing-casing annulus, nitrogen cushions for drill stem testing, pressure testing, insulation of the tubing-casing annulus to prevent such problems as paraffin precipitation, jetting with proppant for perforating and cutting operations, reduction of density of well workover fluids, displacement of well fluid from tubing during gun perforation operations to prevent excess hydrostatic pressure in the hole from pushing perforation debris into the formation, placing corrosion inhibitors by misting the inhibitor with nitrogen, extinguishing well fires, and other operations. Other operations that require cryogenic fluids at a high temperatures up to 400°F include pipeline purging and drying operations, and refinery operations such as, recharging catalysts.

Nitrogen is typically stored in its liquid state because of the volume used however, liquid nitrogen will damage most carbon steel pipes used in oil and gas wells. Thus, various heating systems have been developed to raise the nitrogen to an ambient temperature. Typically, 185 BTUs per pound of nitrogen are required to heat the nitrogen to an ambient temperature of 70° F.

One particular such operation is the fracturing of a subsurface formation of the well by pumping a fluid under very high pressure into the formation. The fracturing fluid which is pumped into the well often comprises a foamed gel which is produced by the use of nitrogen gas. The nitrogen for the foam fracturing operation is generally stored in a fluid form at temperatures of approximately ⁻320° F.

At pressures encountered in these foam fracturing operations, the nitrogen changes state from a liquid to a gas at approximately 200° F. It is, therefore, desirable to heat up the nitrogen gas so that the foam fracturing fluid being pumped down the well will be at an essentially ambient temperature. This is because of the numerous adverse affects upon mechanical equipment at very low temperature.

With regard to oil well operations, the nitrogen heating equipment generally includes open flame heaters. For example, with currently available technology, the only way to elevate the temperature of nitrogen to 400° F is by using devices such as burners or direct fired unit-open flame units. For safety and environmental reasons, open flame heaters are generally not desirable or acceptable on offshore and onshore operations. Open flame heaters are banned from certain operations because they generate sparks and flames that could ignite surrounding vapors and typically the surface temperature on these units is above 250°F which also creates safety hazards. Therefore, there is a need for a heater for the nitrogen which does not have an open flame and the heater does not generate surface temperatures above 250°F.

Such flameless nitrogen heaters have previously been provided by utilizing the heat generated by an internal combustion engine and mechanical components driven thereby to heat a coolant fluid which then transferred its heat to the nitrogen through a series of heat exchangers. Multiple heat exchangers ultimately add to the weight, space and cost of the unit. In addition, these heat exchangers typically do not arrest all of the flames and sparks emitted by the exhaust from the engine.

Numerous problems are encountered with other prior art devices mainly because of the use of air as a heat transfer medium. Air is a notoriously poor heat transfer medium as compared to a liquid. Additionally, due to the large bulky nature of the plenum chamber required for the use of air as a heat transfer medium, the air systems are typically very bulky and heavy.

Therefore, there is a need for a flameless nitrogen unit that is compact in size, efficient in the heat transfer process, and economical. There is also a need for a system that heats fluids to a desired temperature while quenching sparks and maintaining surface temperatures and exhaust temperatures at acceptable levels.

### SUMMARY OF THE INVENTION

US 1,279,135 discloses a heat exchanger arrangement comprising a single cylindrical tank forming a chamber having an inlet and an outlet, the tank being provided with two helical pipes or coils which pass through the tank. In use of the arrangement water is present in the tank, the water being heated. Varnish may flow through one of the coils and air may pass through the other of the coils. The tank thus acts as a heat exchanger.

According to the present invention there is provided a heat exchanger comprising a plurality of co-axially aligned chambers positioned one inside the other for providing radial, thermal heat transfer between a plurality of separately contained fluids, and a helical tube, wherein the helical tube has an inlet and an outlet wherein the tube has at least one portion positioned within at least one of the chambers and another portion positioned within another of the chambers.

Preferably the plurality of chambers includes a first chamber having at least one inlet, a second chamber disposed in the first chamber, wherein the second chamber has at least one inlet, a third chamber disposed in the second chamber, wherein the third chamber has at least one inlet, a fourth chamber disposed in the third chamber, wherein the fourth chamber has at least one inlet and a fifth chamber disposed in the fourth chamber, wherein the fifth chamber has at least one inlet.

Conveniently the helical tube has a first portion disposed in the first chamber, a second portion disposed in the second chamber, a third portion disposed in the third chamber and a fourth portion disposed in the fourth chamber.

Advantageously the helical tube has a tube fluid flow therethrough, the first chamber has a first fluid flow therethrough, the second chamber has a second fluid flow therethrough, the third chamber and the fifth chamber have a third fluid flow therethrough, and the fourth chamber has a fourth fluid flow therethrough.

One embodiment of the invention comprises a heat exchanger comprising a first chamber having at least one inlet, a second chamber having at least one inlet, wherein the second chamber is positioned inside the first chamber, a third chamber having at least one inlet, wherein the third chamber is positioned inside the second chamber, a fourth chamber having at least one inlet, wherein the fourth chamber is positioned inside the third chamber, and a helical tube having an inlet, wherein at least a portion of the helical tube is disposed in the first, second, third and fourth chambers, the helical tube thus having a first portion disposed within the first chamber, a second portion disposed within the second chamber, a third portion disposed within the third chamber and a fourth chamber, wherein the first, second, third and fourth chambers are in co-axial alignment.

Preferably the helical tube has a tube fluid flow therethrough, the first chamber has a first fluid flow therethrough the second chamber has a second fluid flow therethrough, the third chamber has at least a first portion of a third fluid flow therethrough, and the fourth chamber has a fourth fluid flow therethrough, wherein the first, second, third, fourth and tube fluid flows do not mix.

Conveniently a fifth chamber having at least one inlet, wherein the fifth chamber is positioned inside the fourth chamber, wherein the fifth chamber has a second portion of the third fluid flow therethrough.

Preferably the tube fluid flow through the first portion is in a counter-flow arrangement with the first fluid flow in the first chamber.

Conveniently the tube fluid flow through the second portion is in a counter-flow arrangement with the second fluid flow in the second chamber.

Advantageously the tube fluid flow through the third portion is in a counter-flow arrangement with the third fluid flow in the third chamber.

Conveniently the fourth portion of the helical tube forms an inner coil and an outer coil, wherein the tube fluid flow through the inner coil is in a counter-flow relationship with the fourth fluid flow and the tube fluid flow through the outer coil is in a parallel flow relationship with the fourth fluid flow.

Advantageously the heat exchanger further comprises at least one spiral fin positioned between the turns of a portion of the helical tube.

Preferably the heat exchanger further comprises a spiral fin positioned inside the fourth chamber, wherein at least some of the turns of the spiral fin are positioned between at least some of the turns of the fourth portion of the helical tube.

Conveniently the heat exchanger further comprises an inlet cone in flow communication with one end of the heat exchanger and a diffuser defining a plurality of openings therein positioned downstream of the inlet cone.

Conveniently the inlet cone further comprises an inside surface and an outside surface, wherein the outside surface is coated with an insulating material, so that the outside surface of the inlet cone has a lower temperature than the inside surface of the inlet cone. The heat exchanger may further comprise an exit cone in flow communication with the opposite end of the heat exchanger, wherein the exit cone comprises an inlet and an outlet, an inner cone and an outer cone, wherein the inner cone has a spiral fin extending between the inner cone to the outer cone to form a spiral flow path between the inner cone and the outer cone.

Conveniently the exit cone further comprises an inside surface and an outside surface, wherein the outside surface is coated with an insulating material, so that the outside surface of the exit cone has a lower temperature than the inside surface of the exit cone.

Advantageously the heat exchanger may further comprise a flame retarding element positioned in flow communication with the third fluid flow exiting the heat exchanger.

Preferably the flame retarding element is a mesh screen.

Conveniently the first fluid flow is hydraulic fluid, the second fluid flow is case hydraulic fluid, the third fluid flow is exhaust, the fourth fluid flow is a coolant and wherein liquid nitrogen flows through the helical tube.

A preferred embodiment of the present invention is a heat exchanger that collects heat from three sources generated by a drive system using an internal combustion engine and uses the heat to warm a fluid stream. The heat exchanger has three preferably cylindrical chambers one inside the other in co-axial alignment. The second chamber is positioned inside the first, and the third chamber is inside the second. Helical tubes are positioned inside the chambers to carry fluids for the heat exchange process. A first portion of a first helical tube is positioned inside the second chamber, and the second portion of the first helical tube is positioned in the third chamber. The second chamber has a hole in the wall to allow the passage of the second portion of the first tube into the third chamber. A second helical tube is positioned inside the first chamber.

Preferably, the first tube has a first fluid flow therethrough such as nitrogen or some other cryogenic fluid. The second tube has a second fluid flow therethrough, such as hydraulic fluid from the drive system. The second chamber has a third fluid flow therethrough, such as engine coolant, that also flows through the first chamber. Finally, the third chamber has a fourth fluid flow therethrough, such as exhaust from the engine. Preferably, the walls of the second and third chambers are made of a heat conducting material such as stainless steel or copper, so that the fluids flowing therethrough can benefit from radial heat transfer from one chamber to the next.

Alternatively, a third helical tube may be positioned inside the first chamber in parallel with the second helical tube. The third helical tube has a fifth fluid flow therethrough such as hydraulic fluid from the casing of the various pumps used in the drive system. In addition, the fifth fluid flow is preferably in a counter-flow relationship with the fluid flow inside the first chamber.

In a preferred embodiment, all of the fluids travelling through the heat exchanger are in a counter-flow relationship, such that, i) the first fluid flow through the first portion of the first tube is in a counter-flow arrangement with the third fluid flow in the second chamber, ii) the first fluid flow through the second portion of the first tube is in a counter-flow arrangement with the fluid flow in the third chamber, and iii) the second fluid flow through the second tube is in a counter-flow arrangement with the fluid flow in the first chamber.

In order to maximise the available surface area, the individual chambers of the heat exchanger may be equipped with spiral fins. The fins are positioned such that they spiral in the same orientation as the helical tubes within the chambers and they are positioned between the turns of the helical tubes. The spiral effect of the fins causes the fluid flow through the individual chambers to come into contact with all sides of the helical tubes. The fins can be positioned between each turn or some of the turns of the helical tubes.

The fourth fluid flow or exhaust passes through the third chamber and exposes the second portion of the first tube to the heat from the exhaust. The exhaust then exits through one end of the heat exchanger. In order to direct the flow from the exhaust, a cylindrical core with spiral fins may be positioned inside the third chamber. The cylindrical core acts to reduce sparks from the exhaust and disperse the flow of the exhaust gases to maximise the surface area of the tube exposed to the exhaust. The unit may also be equipped with a diffuser at each end and a cone shaped inlet and outlet for the exhaust gases to reduce engine noise.

Auxiliary pumps may be used to conduct the fluids through the helical tubes and the coolant through the chambers to compensate for the pressure drop that is incurred as the fluids flow through the heat exchanger.

In another embodiment, a system is provided for converting a liquid to a gas. The system includes a liquid source such as liquid nitrogen or other cryogenic fluid, a drive system including a pump, such as a triplex nitrogen pump connected to the liquid source. The drive system includes an internal combustion engine such as a diesel engine from Detroit, Caterpillar or other commercially available source for driving a hydraulic pump that provides hydraulic fluid to run a hydraulic motor that drives the nitrogen pump in addition to other pumps required to transport the fluids through the system. A heat exchanger is used for providing a first fluid flow, such as water, from the engine in heat exchange relationship with the liquid to heat and convert the liquid to a gaseous state. The heat exchanger further provides a second fluid flow, such as exhaust from the engine for further heating the cryogenic gas in a heat exchange relationship. The heat exchanger further provides a third fluid flow, such as hydraulic fluid from the drive system for heating the first fluid flow. The heat exchanger is designed such that the first fluid flow, second fluid flow, third fluid flow do not mix. Preferably, a fourth fluid flow, comprising casing hydraulic fluid from the pumps and motors, is-provided in a heat exchange relationship with the first fluid flow.

It is preferred that the liquid is nitrogen, the first fluid flow is substantially water, the second fluid flow is substantially exhaust and the third fluid flow is substantially hydraulic fluid, however other fluids may be substituted to achieve specific heat transfer goals of a particular system. A valve element may be positioned in communication with the gas flow as it exits the heat exchanger to control the temperature of the gas as it exits the heat exchanger. The heat exchanger is designed to provide maximum heat transfer with minimum heat loss to the atmosphere, to increase efficiency and lower the cost of providing cryogenic fluids at an acceptable temperature.

One embodiment of the invention may be in the form of a heat exchanger that collects heat from four sources generated by a power source, such as an internal combustion engine and uses the heat to warm a fluid stream. At the same time, the fluid stream, such as nitrogen liquid, is used to cool some or all of the collected fluids to acceptable operating temperatures. The heat exchanger can have five preferably cylindrical chambers one inside the other in co-axial alignment. A helical tube is positioned inside the chambers to carry a fluid to be heated and/or vaporised using a heat exchange process. A first portion of the helical tube is positioned inside a first chamber, a second portion of the helical tube is positioned in a second chamber, a third portion of the helical tube is positioned in a third chamber and a fourth portion of the helical tube is positioned in a fourth chamber. The chambers are adapted to allow the passage of the helical tube from one chamber to the next.

Preferably, the helical tube has a tube fluid flow therethrough such as nitrogen or some other cryogenic fluid. The first chamber has a first fluid flow therethrough, such as main hydraulic fluid from the drive system. The second chamber has a second fluid flow therethrough, such as case hydraulic fluid. The third chamber and the fifth have a third fluid flow therethrough, such as exhaust from the engine. The fourth chamber has a fourth fluid flow therethrough, such as coolant. The fluids in each of the chambers may be suited to accommodate variances in pressure and flow volume. Preferably, the walls of all the chambers inside the first chamber are made of a heat conducting material such as stainless steel, copper, brass or aluminum so that the fluids flowing therethrough can benefit from radiant heat transfer from one chamber to the next.

In a preferred embodiment, all of the fluids traveling through the heat exchanger are in a counter-flow relationship, such that, i.) the tube fluid flow through the first portion of the helical tube is in a counter-flow arrangement with the first fluid flow, ii.) the tube fluid flow through the second portion is in a counter-flow arrangement with the second fluid flow in the second chamber, iii) the tube fluid flow through the third portion is in a counter-flow arrangement with the third fluid flow in the third chamber, and iv) the fourth portion of the helical tube is in a counter-flow arrangement with the fourth fluid flow in the fourth chamber.

The fourth portion of the helical tube in the heat exchanger preferably forms an inner coil and an outer coil. The tube fluid flow through the inner coil is in a counter-flow relationship with the fourth fluid flow and the tube fluid flow through the outer coil is in a parallel flow relationship with the fourth fluid flow. The tube fluid flow in the inner coil flows in a parallel-flow relationship with the fluid flow in the third and fifth chambers. The tube fluid flow in the outer coil flows in a counter-flow relationship with the fluid flow in the third and fifth chambers. The fourth fluid flows in a counter-flow relationship with the fluid flow in the third and fifth chambers.

In order to maximize the available surface area, the individual chambers of the heat exchanger may be equipped with spiral fins. The fins are positioned such that they spiral or turn in the same orientation as the helical tube portions within the chambers and they are positioned between the turns of the helical tube portions. The fins may be attached to the inner or outer walls of the chambers. The spiral orientation of the fins causes the fluid flowing through the individual chambers to have the same flow pattern as the helical tubes, increasing surface area contact and contact time, thus improving over all efficiency in a compact space. The fins can be positioned between some or all of the turns of the helical tubes.

A portion of the third fluid flow or exhaust passes through the third chamber and exposes the third portion of the first tube to the heat from the exhaust and a portion passes through the fifth chamber. The exhaust then exits through one end of the heat exchanger. In order to decrease the potential sparks and flames from the exhaust, the exhaust is passed through a diffuser at the inlet cone, a flame trap mesh element and an exit cone at the opposite end of the heat exchanger. The diffuser at the inlet cone disperses the flow of the exhaust. The exit cone has an internal spiral fin that causes the exhaust flow to move in a centrifugal motion. The diffuser and fined cone cause the sparks to rest. The flame trap mesh is installed on the exit side of the heat exchanger to trap any flames that may be generated by the engine exhaust.

The exhaust flow passes through six stages in the heat exchanger. First, the exhaust flow enters the heat exchanger through an inlet cone. The inlet cone expands the flow area of the exhaust, which in turn causes the exhaust pressure to drop and the velocity of the exhaust flow to increase. Second, the exhaust passes through a diffuser, causing the flow to be dispersed including any sparks and flames that may be present in the flow. Third, a first portion of the exhaust flow passes through the third chamber and a second portion passes through the fifth chamber. In the third chamber, the exhaust flow passes over the third portion of the helical tubes, further reducing the possibility of flames and/or sparks passing through the heat exchanger. In the fifth chamber, the exhaust flow encounters at least one mesh element, absorbing any remaining flames. Fourth, as the first and second portions of the exhaust stream exit the third and fifth chambers, where the bulk of the stream is forced to enter an exit cone through an opening in the exit cone. The exit cone has an outer cone and an inner cone with spiral fins between the inner and outer cone. Fifth, the exhaust flow enters the opening in the exit cone and passes between the inner and outer cones. The fins on the inner cone forces the exhaust stream into a centrifugal motion, causing any residual sparks and/or flames to be dispersed. Sixth, the exhaust stream after at least one turn between the inner and outer cones is mixed with a cryogenic fluid stream, such as nitrogen. The cryogenic fluid stream cools the exhaust stream and removes any possible remaining sparks and/or flames in the exhaust stream and provides the ability to control the temperature of the exiting exhaust stream.

Mixing the exiting exhaust stream with a cryogenic liquid, such as nitrogen can be accomplished manually by a manual control valve adjusted by the operator of the unit to maintain an acceptable exhaust temperature. This is particularly important in hazardous areas where exhaust temperature is not to exceed 400°F.

In a preferred embodiment, the exhaust temperature may be controlled by a control system including an automated proportional valve, such as a solenoid valve, a pyrometer, an electric controller and a electrical valve actuator. The pyrometer senses the exhaust temperature, sending signals to the controller which in turn sends a signal to the electrical valve actuator increasing or decreasing the amount of liquid nitrogen flowing into the exhaust stream by opening and closing the solenoid valve, thus adjusting the exhaust temperature exiting the heat exchanger to the atmosphere.

There is an inlet exhaust pipe connecting the exhaust source to the inlet cone on the heat exchanger and an outlet exhaust pipe connected to the exit cone. The inlet exhaust pipe, outlet exhaust pipe, inlet cone, and outlet cone are coated on their outside surfaces, with a heat insulating material to maintain the outer surface temperature at a lower value than the inside surface temperature. The insulating material can be a ceramic coating or any other insulating material that will keep the surface temperature below 250°F. Maintaining a surface temperature of less than 250°F is required by regulation in areas where volatile vapors are present.

Auxiliary pumps may be used to conduct the fluids through the helical tube and the chambers to compensate for any pressure drop that is incurred as the fluids flow through the heat exchanger.

In another embodiment, a system is provided for heating a tube fluid. The system includes a fluid source such as liquid nitrogen or other cryogenic fluid, a power source such as a drive system including a pump, such as a triplex nitrogen pump connected to the fluid source. The power source may include an internal combustion engine such as a diesel engine from Detroit, Caterpillar or other commercially available source for driving a hydraulic pump that provides hydraulic fluid to run a hydraulic motor that drives the nitrogen pump in addition to other pumps required to transport the other fluids through the system. A heat exchanger is used for providing a first fluid flow, such as main hydraulic fluid, from the hydraulic driving system in heat exchange relationship with the tube fluid to heat and or vaporize the tube fluid. The heat exchanger further provides a second fluid flow, such as case hydraulic fluid from the hydraulic pumps for further heating the cryogenic fluid in a heat exchange relationship. The heat exchanger also provides a third fluid flow, such as exhaust from the engine for heating the fluid and a fourth fluid flow such as engine coolant. The heat exchanger is designed such that the first fluid flow, second fluid flow, third fluid flow, fourth fluid flow and the tube fluid flow do not mix.

In a preferred embodiment, the tube fluid is nitrogen, the first fluid flow is substantially main hydraulic, the second fluid flow is substantially case hydraulic, the third fluid flow is substantially exhaust, and the fourth is substantially water, however other fluids may be substituted to achieve specific heat transfer goals of a particular system. A valve element may be positioned in communication with the tube fluid flow, in this case nitrogen gas, allowing a cryogenic fluid to be mixed with the heated tube fluid exiting the heat exchanger as a means for controlling the tube fluid temperature as it exits the heat exchanger.

The heat exchanger described herein provides for multiple heat exchange relationships between the fluids used in one contained unit. The first fluid flow is in heat exchange relation with the tube fluid flow, such that the first fluid flow and the tube fluid flow do not mix. The second fluid flow in heat exchange relation with the tube fluid flow, such that the second fluid flow and the tube fluid flow do not mix.

The first portion of the third fluid flow is in heat exchange relation with the tube fluid flow, such that the first portion of the third fluid flow and the tube fluid flow do not mix. The first portion of the third fluid flow is in heat exchange relation with the second fluid flow, such that the first portion of the third fluid flow and the second fluid flow do not mix. The first portion of the third fluid flow is in heat exchange relation with the fourth fluid flow, such that the first portion of the third fluid flow and the fourth fluid flow do not mix. The second portion of the third fluid flow in is heat exchange relation with the fourth fluid flow, such that the second portion of the third fluid flow and the fourth fluid flow do not mix.

With regard to the radiant heat transfer from one chamber to the helical tube in an adjacent chamber, the heat from the first portion of the third fluid flow is transferred to the second portion of the helical tube through the second fluid flow. The heat from the first portion of the third fluid flow is transferred to the fourth portion of the helical tube through the fourth fluid flow. The heat from the second portion of the third fluid flow is transferred to the fourth portion of the helical tube through the fourth fluid flow. The second and fourth fluid flows are used as heat transfer mediums to transfer the heat obtained from the adjacent chamber into the helical tube portion that is contacted by the second and fourth fluid flows.

The fourth fluid flow in heat exchange relation with the tube fluid flow, such that the fourth fluid flow and the tube fluid flow do not mix.

The first portion of the third fluid flow and the second portion of the third fluid flow are in heat exchange relation with a cryogenic liquid in the exit cone. The first and second portion of the third fluid and the cryogenic fluid mix in the exit cone to cool the exhaust flow as it exits the heat exchanger.

In another embodiment of the present invention, there is provided a flameless fluid heating system for heating fluids such as cryogenic fluids. This system is useful for using exhaust flows to heat fluids where flameless conditions are required and the most useful heat source is an engine such as a diesel engine. The system has a heat exchanger with at least one fluid inlet and at least one fluid outlet. There is an entrance portion in flow communication with the fluid inlet and an exit portion in flow communication with the fluid outlet and a heat insulating element. The entrance portion has a diffuser preferably defining a plurality of openings therein, and an inside surface and an outside surface. The diffuser is designed to reduce sparks that are generated by an exhaust flow. The exit portion has an inner portion and an outer portion, preferably separated by a spiral fin forming a spiral flow path. The outer portion has an outside surface and the inner portion has an inside surface. The heat insulating element, preferably ceramic, is positioned adjacent to the outside surface of the entrance portion and the outside surface of the outer portion, for maintaining the outside surfaces at a desired temperature.

Preferably, the entrance portion, the exit portion, the inner portion, and the outer portion are conical in shape and the inner portion includes an entrance opening and the outer portion has an exit opening. In addition, a flame trap mesh screen, made of stainless steel or other similar material may be positioned near the exit portion to further arrest any flames or sparks that may be present in the exhaust flow. The heat insulating element may coat all outside surfaces that are made of stainless steel or other highly conductive material so that when a hot fluid such as exhaust is passed through the heat exchanger, the outside surfaces of the coated portions will maintain a temperature below 250°F. The heat insulating element is a material that has poor heat conducting qualities such as ceramic.

In yet another embodiment, there is provided a method for arresting at least a portion of sparks and flames present in a heated fluid flow. Preferably, all of the flames and sparks are arrested using this method. The term "arresting" is used here to mean that the flames and sparks are stopped by the method described. This method may be employed using the system or heat exchanger described above or with a similar system. The heated fluid flow is passed to a chamber having a fluid inlet and a fluid outlet, and an entrance portion in flow communication with the fluid inlet. The heated fluid flow is passed through a diffuser to a central portion of the chamber. The heated fluid flow is passed through a flame trapping element, such as the flame trap mesh described below. The heated fluid flow is then passed through an exit portion in flow communication with the fluid outlet. Preferably, the heated fluid flow is forced into a spiral flow path formed by the exit portion.

A heat insulating element may be positioned adjacent to an outside surface of the entrance portion and an outside surface of the exit portion for maintaining the outside surfaces at a desired temperature. The heat insulating element may be ceramic or some other material having poor heat conductivity.

In order to further reduce sparks and flame in the heated fluid flow, the heated fluid flow may be exposed to a heat transfer fluid to transfer heat away from the heated fluid flow. The heat transfer fluid and the heated fluid flow do not mix. The heat transfer fluid may be contained in a helical tube much like that described above. In addition, the heated fluid flow may be exposed to a cryogenic fluid, which will mix with the heated fluid flow to reduce the temperature of the heated fluid flow and arrest any residual sparks and /or flames. This step may be performed as the heated fluid flow exits the chamber.

The heat exchanger disclosed herein is designed to provide a maximum rate of heat transfer with minimum heat loss to the atmosphere, which increases efficiency, decreases the horse power requirement, allows for a smaller engine, and lower cost for providing cryogenic fluids at ambient and high temperatures up to 400° F. In addition, the present heat exchanger controls the surface temperature of the unit as well as quenching any sparks or flames that may exist in the exhaust flow prior to entering the atmosphere.

### BRIEF DESCRIPTION OF THE DRAWINGS

So that the above recited features and advantages of the present invention can be understood in detail, a more particular description of the invention, briefly summarized above, may be had by reference to the embodiments thereof which are illustrated in the appended drawings. It is to be noted, however, that the appended drawings illustrate only typical embodiments of this invention and are therefore not to be considered limiting of its scope, for the invention may admit to other equally effective embodiments.
Figure 1 is a perspective view of the heat exchanger of the present invention.
Figure 2 is a cross-sectional view of heat exchanger taken along lines A-A in figure 1.
Figure 3 is a schematic of a system using the heat exchanger of the present invention.
Figure 4 is a perspective view of a cone and diffuser combination of the present invention.
Figure 5 is a schematic view of the spiral fins used in the present invention.
Figure 6 is a perspective view of the heat exchanger of the present invention.
Figure 7 is a cross-sectional view of the heat exchanger shown in Figure 6.
Figure 8 is a schematic of a system using the heat exchanger of the present invention.
Figure 9 is a perspective view of an inlet cone of the present invention.
Figure 10 is a perspective view of the diffuser of the present invention
Figure 11 is an exploded view of an exit cone with a spiral fin.
Figure 12 is a schematic view of the spiral fins used in the chambers in the present invention.
Figure 13 is a schematic view of a controller system of the present invention.
Figure 14 is a perspective view of an alternative embodiment of the present invention.

### DETAILED DESCRIPTION OF THE INVENTION

One aspect of the present invention provides a heat exchanger that collects heat through radiant transfer from coolant fluid and exhaust gases and transfers the heat to the liquid nitrogen. The liquid nitrogen is exposed to the heat from the engine coolant and is converted to a gas. Once in the gas phase, the nitrogen is further heated by the exhaust gases and exits the heat exchanger at a controllable temperature of from 70 - 150°F. During the heat transfer process, the engine coolant gives up heat to the nitrogen and is overcooled by the liquid nitrogen. The overcooled coolant then travels to the hydraulic chamber and absorbs the heat from the hydraulic fluids thus reducing the temperature of the hydraulic fluid. The coolant then travels out of the heat exchanger and back into the engine. The nitrogen liquid travels in one direction down the heat exchanger through the second chamber, at the opposite end of the heat exchanger, the nitrogen, now a gas, reverses direction and travels in the opposite direction in the third chamber. While in the third chamber, the nitrogen gas is further warmed by the exhaust stream flowing over the tube carrying the nitrogen. The nitrogen then exits the heat exchanger for use in the desired application. The hydraulic fluid is contained in a hydraulic tube positioned in a first chamber that is filled with circulating coolant that has been cooled by the liquid nitrogen in a second chamber. Preferably, all the fluids in this system flow in a counter flow arrangement to maximize the radiant heat transfer process. The heat exchanger reduces the amount of heat lost, thereby increasing the efficiency of the heat transfer, and reducing the size engine required to generate heat. Using a smaller engine will save space as well as money for the operator.

The temperature of the nitrogen exiting the system is related to the amount of heat generated by the system. The heat generated by the system can be balanced by controlling the velocities of fluids flowing through the heat exchanger. The engine runs at a constant speed, therefore, the coolant velocity is relatively constant. The nitrogen is delivered through a hydraulically driven nitrogen pump that is powered by a hydraulic motor, which is supplied with hydraulic fluid from the engine hydraulic pump. The nitrogen flow rate dictates the amount of horsepower output required from the hydraulic motor. A high nitrogen flow rate increases the amount of hydraulic oil demand from the engine, and increases the horsepower output, which in turn increases the heat created by the oil, coolant, and exhaust.

In another aspect of the invention, there is provided a heat exchanger that employs a radial design for transferring heat from several sources into a fluid stream in one contained unit. The design includes a radial arrangement of flow tubes and chambers that are self-contained to reduce heat loss from one heat transfer phase to the next. The unit is designed to provide multiphase heat transfer using coolant, hydraulic fluid and exhaust from an external engine to heat liquid nitrogen, cool hydraulic fluid as well as reduce the temperature of waste exhaust. The heat exchanger is based on overcooling of the engine coolant by loosing heat to the liquid nitrogen or other cryogenic fluid, then using the overcooled coolant to withdraw heat from the hydraulic fluids in an efficient manner. In addition, cryogenic fluids that are normally vented to atmosphere during cool downs or pump priming, can be vented directly into the exhaust stream, further cooling the exhaust and vaporizing the cryogenic fluids prior to entry to the atmosphere.

In yet another aspect of the present invention, there is provided a radially designed heat exchanger that muffles the exhaust coming from the engine. The exhaust is fed through a cone and a diffuser to a cylindrical core having spiral fins inside the heat exchanger that reduces noise and acts as a spark arrestor.

For example, the heat exchanger of the present invention may be used to heat and/or vaporize nitrogen at a rate of 180K scf/h from -320 F to 115 F using a 315 HP engine. Currently available systems require a 380HP engine to achieve similar results.

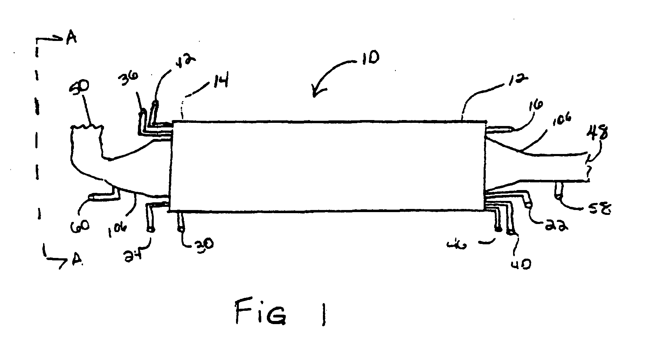

Figure 1 is a perspective view of the heat exchanger 10 of the present invention. The heat exchanger 10 has a first end 12 and a second end 14. A liquid nitrogen inlet 16 is located near the first end 12 and a gaseous nitrogen outlet 22 is located near the first end. The engine coolant enters the heat exchanger 10 through coolant inlet 24 and exits through coolant outlet 30. The engine main hydraulic fluid enters through hydraulic inlet 36 and exits through hydraulic outlet 40. The case hydraulic fluid enters through inlet 42 and exits through outlet 46. The engine exhaust enters through exhaust inlet 48 and exits through exhaust outlet 50. Nitrogen that is normally vented to the atmosphere from various pumps, can be vented into the exhaust stream through a vent line 58. If the engine is working very hard and producing exhaust that is too hot to be vented to the atmosphere, the exhaust can be cooled by injecting a small amount of liquid nitrogen into the exhaust stream near the second end of the heat exchanger 10 through inlet 60.

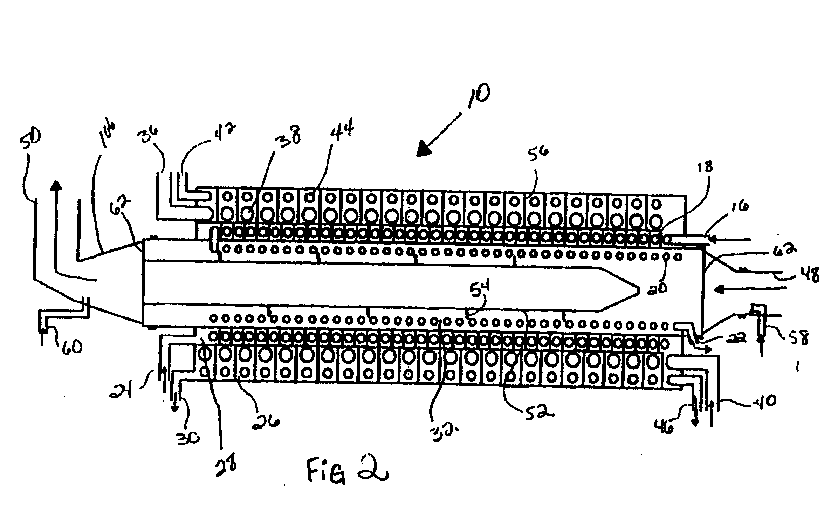

Figure 2 is a cross-sectional view of heat exchanger 10 taken along lines A-A. The heat exchanger 10 has a first cylindrical chamber 26, a second cylindrical chamber 28, and a third cylindrical chamber 32. A first portion 18 of a first helical tube is positioned inside the second chamber 28 and a second portion 20 of the first helical tube is positioned inside the third chamber 32. Starting at the first end 12, the nitrogen inlet 16 communicates with the first portion 18 of the first helical tube and the nitrogen outlet 22 communicates with the second portion 20 of the first helical tube. Coolant inlet 24 communicates with the second chamber 28 near the second end 14, and coolant outlet 30 communicates with the first chamber near the second end 14. Hydraulic inlet 36 communicates with the second helical tube 38 near the second end 14, and hydraulic outlet 40 communicates with the first chamber near the first end 12. The exhaust inlet 48 communicates with the third chamber 32 near the first end 12, and the exhaust outlet communicates with the third chamber near the second end 14.

The exhaust chamber 32 may include a cylindrical core 52 for reducing sparks caused by the exhaust. The cylindrical core 52 may include spiral fin 54 positioned on the outside of the cylindrical core for dispersing the exhaust and increasing the surface area of the tubes 20 that are exposed to the heat from the exhaust, thereby maximizing the heat transfer therebetween. In addition to the cylindrical core 52, a diffuser 62 equipped with a cone shaped structure, positioned at each end of the third chamber may be used to reduce the noise from the exhaust.

Each chamber preferably includes a spiral fin that is positioned between the turns of at least some of the helical tubes to direct fluid flows and maximize the surface area of the tubes exposed to the fluids. Preferably, the fins can be made of any commercially available heat transfer medium so as to not inhibit the heat transfer from the fluid flow to the helical tubes.

The outer wall of the first chamber 26 can be made from steel, or preferably a heat transfer material such as brass. The walls of the second and third chambers may also be made from a heat transfer material such as steel, copper, brass or mixtures thereof, most preferably, brass, to maximize the radial heat transfer between the exhaust, hydraulic oil and the coolant.

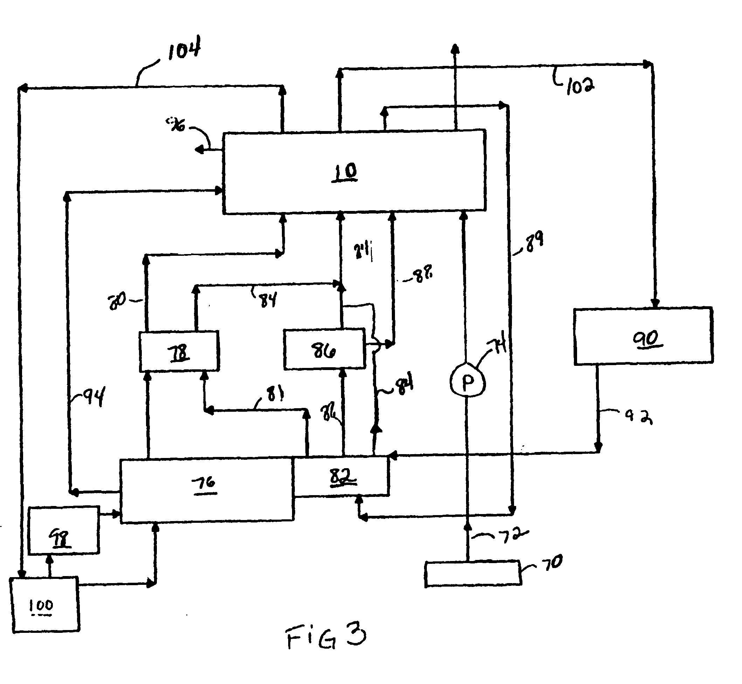

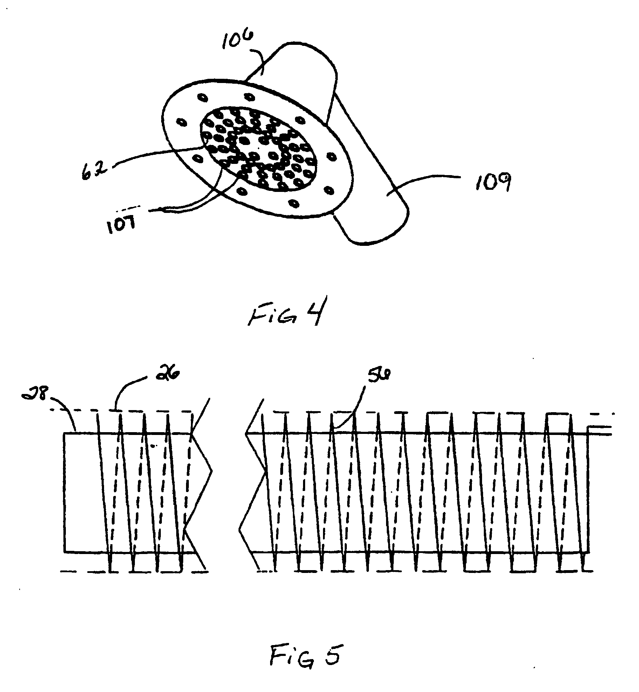

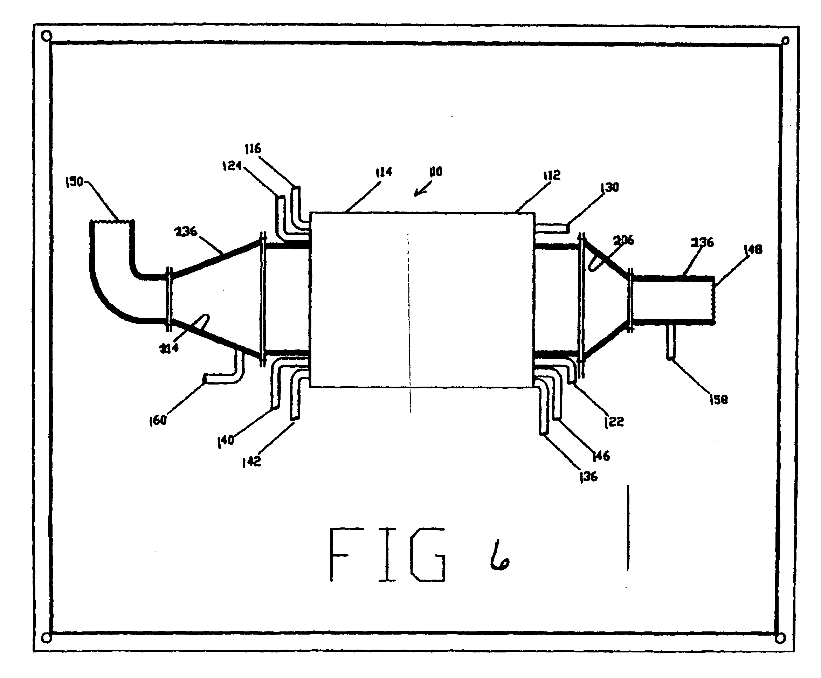

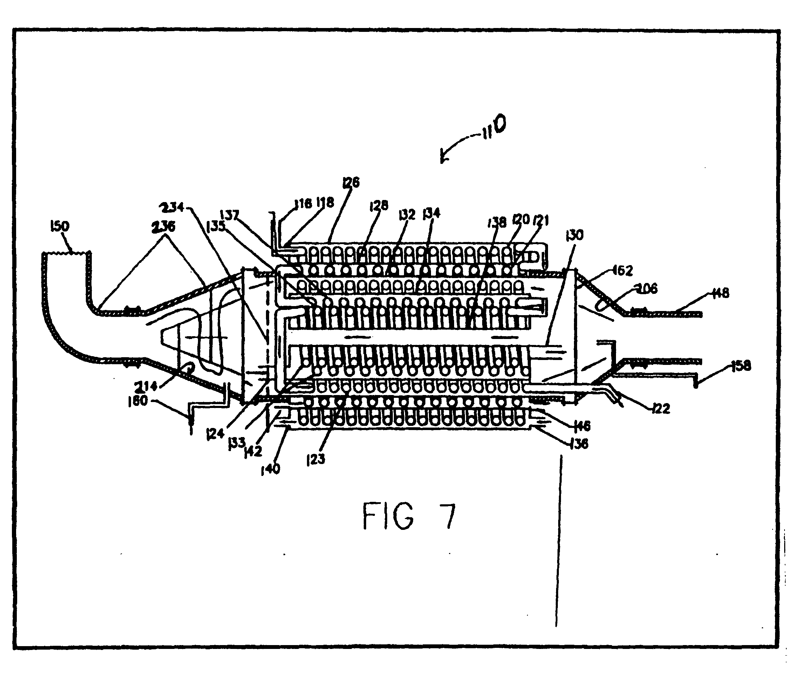

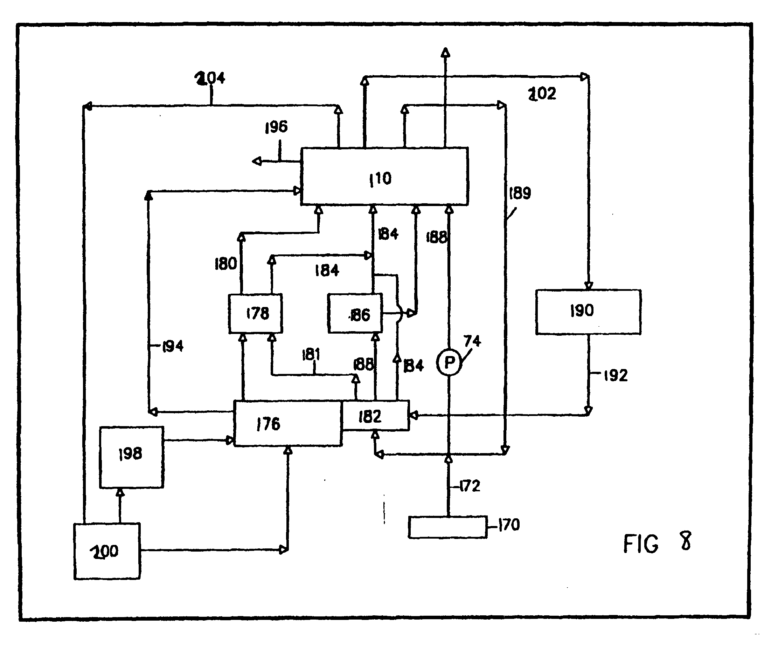

Figure 3 is a schematic of a system using the heat exchanger of the present invention. A triplex nitrogen pump 74 is used to send nitrogen from a nitrogen source 70 through conduit 72 to the heat exchanger 10. The pump 74 is driven by a hydraulic motor 86. The engine 76 drives the hydraulic pump 82 which supplies hydraulic fluid to motor 86 and other hydraulic motors in the system. The coolant fluid from the engine 76 is pumped into the heat exchanger 10 through a coolant pump 78 and conduit 180. The case drain and return hydraulic fluid from a hydraulic pump 82, coolant pump 78 and hydraulic motor 86 are sent to the heat exchanger 10 through via conduit 84 and exit the heat exchanger through conduit 102 to a hydraulic fluid source 90. Main hydraulic fluid from hydraulic pump 82, rotary motor 86 is transferred to heat exchanger 10 through conduit 88 and returns to the hydraulic pump 82 through conduit 89 which completes a closed loop between hydraulic motor 86 and hydraulic pump 82. The hydraulic pump 82 is connected to a hydraulic fluid source 90 via conduit 92. The engine exhaust is transferred to the heat exchanger 10 through conduit 94 and exits the heat exchanger through conduit 96. Once the coolant exits the heat exchanger 10, it is transferred to either the engine radiator 98 or to the water pump in the engine 76. The coolant flow flows from the heat exchanger 10 through conduit 104 to a thermostatic valve 100 for regulating flow of the coolant, so that if the coolant temperature is too high the coolant is transferred to the engine radiator 98.

It is desirable for certain applications that the nitrogen be within a certain temperature range. In order to achieve a certain temperature range, a self-controlled tempering valve connected to a nitrogen source may be used to add liquid nitrogen to the nitrogen gas exiting the system if the temperature is too high.

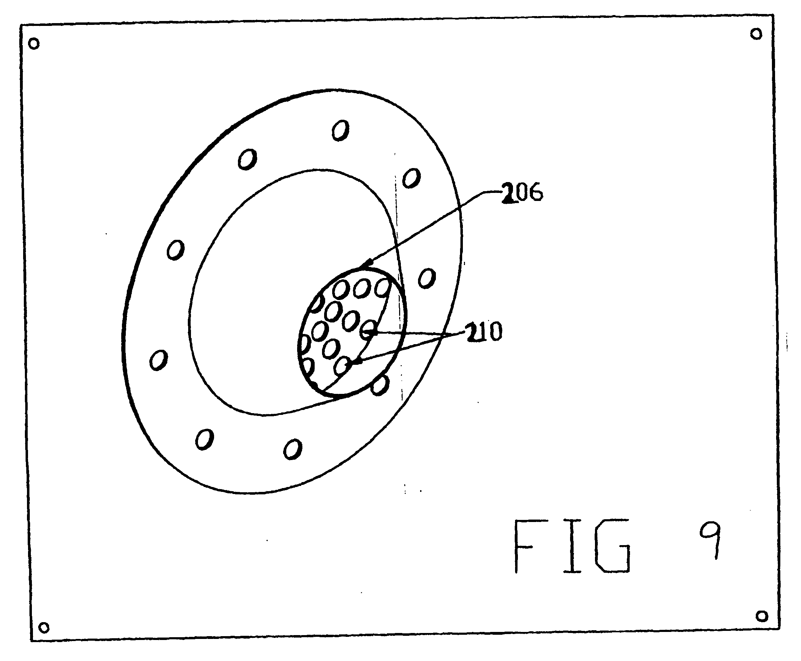

Figure 4 is a perspective view of a cone and diffuser combination that is positioned on each end of the heat exchanger. Only one cone and one diffuser is shown for simplicity. The cone 106 is attached, typically with bolts, to the ends of the heat exchanger, in communication with the exhaust flow through the heat exchanger. The cone has a diffuser 62 which consists of a generally flat plate defining holes 107 therethrough. The cone has an tube 109 extending away from the diffuser 62 for attachment to the exhaust source at one end of the heat exchanger or for venting the exhaust to the atmosphere at the other end. The diffuser 62 and cone 106 act to reduce engine noise.

Figure 5 is a schematic view of the spiral fins used in the present invention. For clarity, the first chamber 26 is shown in dotted lines and the helical tube has been removed. The fins 56 are positioned around the outside of the second chamber 28 for directing the fluid flow through the first chamber so that the fluid contacts the maximum surface area of the helical tube passing through the first chamber 26, thus increasing the heat transfer efficiency of the system.

Another aspect of the present invention provides a heat exchanger that collects heat through radiant transfer from hydraulic fluids, coolant fluid and exhaust gases and transfers the heat to the nitrogen, which exits the heat exchanger at controllable temperature between 70 -400°F. During the heat transfer process, the hydraulic fluids give up heat to the nitrogen-and are cooled to a reasonable operating temperature by the liquid nitrogen. The hydraulic fluids then travel out of the heat exchanger and into the hydraulic pump when a closed loop hydraulic system is being used or into the hydraulic tank when an open loop system is being used. The nitrogen liquid travels in one direction down the heat exchanger through the first chamber, to one end of the heat exchanger, then reverses direction and travels in the opposite direction in the second chamber and then to the fourth chamber. While in the fourth chamber, the nitrogen is warmed by the engine coolant. The nitrogen then travels to the third chamber where it is further heated by the exhaust stream flowing over the tube carrying the nitrogen. The fluids in each chamber fill the chamber surrounding the tube carrying the nitrogen. Preferably, all the fluids in this system flow in a counter flow arrangement to maximize the radiant heat transfer process. The heat exchanger reduces the amount of heat lost, thereby increasing the efficiency of the heat transfer, and reducing the size engine required to generate the required amount of heat. Using a smaller engine will save space as well as money. For example, the heat exchanger of the present invention may be used to heat and/or vaporize nitrogen at a rate of 180K scf/h using a 315 HP engine. Currently available systems require a 380HP engine to achieve similar results.

The temperature of the nitrogen exiting the system is related to the amount of heat generated by the system. The heat generated by the system can be balanced by controlling the velocities of fluids flowing through the heat exchanger. The engine runs at a constant speed, therefore, the coolant velocity is relatively constant. The nitrogen is delivered through a hydraulically driven nitrogen pump that is powered by a hydraulic motor, which is supplied with hydraulic fluid from the engine driven hydraulic pump. The nitrogen flow rate dictates the amount of horsepower output required from the hydraulic motor. A high nitrogen flow rate increases the amount of hydraulic oil demand from the engine, and increases the horsepower output, which in turn increases the heat created by the hydraulic oils, coolant, and exhaust.

In another aspect of the invention, there is provided a heat exchanger that employs a radial design for transferring heat from several sources into a fluid stream in one contained unit. The design includes a radial arrangement of one continuous flow tube and several chambers that are self-contained to reduce heat loss from one heat transfer phase to the next. The unit is designed to provide multiphase heat transfer using engine coolant, hydraulic fluids and exhaust from an external engine to heat and/or vaporize nitrogen, cooling the hydraulic fluids and the engine coolant to an operating temperature as well as reduce the temperature of waste exhaust. The heat exchanger is based on radiant heat transfer from the hydraulic fluids, engine coolant and exhaust into liquid nitrogen or other cryogenic fluid in an efficient manner. In addition, from safety point of view, cryogenic fluids that are normally vented to atmosphere during cool downs or pump priming, can be vented directly into the exhaust stream, vaporizing the cryogenic fluids prior to entry to the atmosphere.

In yet another aspect of the present invention, there is provided a radially designed heat exchanger that muffles the exhaust coming from the engine. The exhaust is fed through a cone and a diffuser, where the flow area expands causing the exhaust pressure to drop. The exhaust then passes through at least one cylindrical chamber and is collected by the exit cone. Having a cone at the entrance and exit of the heat exchanger causes the expansion of the exhaust flow area which in turn results in a dramatic reduction in noise. In addition, there is an insulating material present on the outside surfaces of the inlet and exit cones so that the outside surface temperature does not exceed 250°F.

Figure 6 is a perspective view of the heat exchanger 110 of the present invention. The heat exchanger 110 has a first end 112 and a second end 114. A liquid nitrogen inlet 116 is located near the second end 114 and a gaseous nitrogen outlet 122 is located near the first end 112. The engine coolant enters the heat exchanger 110 through coolant inlet 124 and exits through coolant outlet 130. The engine main hydraulic fluid enters through hydraulic inlet 136 and exits through hydraulic outlet 140. The case hydraulic fluid enters through inlet 142 and exits through outlet 146. The engine exhaust enters through exhaust inlet 148 and exits through exhaust outlet 150. Nitrogen that is normally vented to the atmosphere from various pumps, can be vented into the exhaust stream through a vent line 158. If the engine is under a high load and producing exhaust that is too hot to be vented to the atmosphere, the exhaust can be cooled by injecting a small amount of liquid nitrogen into the exhaust stream near the second end of the heat exchanger 110 through inlet 160. The outside surfaces of the inlet and exit cones are coated with an insulating material 236 such as ceramic to keep-the-outside-surface temperature below 250 F.

Figure 7 is a cross-sectional view of heat exchanger 110 taken along lines A-A. The heat exchanger 110 has a first cylindrical chamber 126, a second cylindrical chamber 128, a third cylindrical chamber 132, a fourth chamber 134, and a fifth chamber 138. A helical tube 118 is shown with a first portion 120 positioned inside the first chamber 126, a second portion 121 positioned inside the second chamber 128, a third portion 123 positioned inside the third chamber 132, and a fourth portion 133 positioned inside the fourth chamber 134. Starting at the second end 114, the nitrogen inlet 116 communicates with the first portion 120 of the helical tube 118 and the nitrogen outlet 122 communicates with the third portion 123 of the helical tube 118. Coolant inlet 124 communicates with the fourth chamber 134 near the second end 114, and coolant outlet 130 communicates with the fourth chamber 134 near the first end 112. Main hydraulic inlet 136 communicates with the first chamber 126 near the first end 112, and main hydraulic outlet 140 communicates with the first chamber near the second end 114. The exhaust inlet 148 communicates with the third chamber 132 near the first end 112 and the fifth chamber 138 and the exhaust outlet 150 communicates with the third and fifth chambers 132, 138 near the second end 114.

The nitrogen enters inlet 116 and travels through the helical tube 118 through the first chamber 126 where it is warmed by the main hydraulic fluid, to the second chamber 128 where it is warmed by the case hydraulic fluid, to the fourth chamber 134 where it is warmed by the coolant, and to the third chamber 132 where it is finally warmed by the exhaust stream.

The helical tube in the fourth chamber 134 forms an inner coil 135 and an outer coil 137. The nitrogen or tube fluid flow in the outer coil 137 flows in a parallel relationship with the fourth fluid flow or coolant in the fourth chamber 134 and the tube fluid flow in the inner coil 135 flows in a counter-flow relationship with the fluid flow in the fourth chamber 134. Likewise, the fluid flow in the fourth chamber flows in a counter-flow relationship with the fluid flow in the fifth chamber 138 and the third chamber 132. The parallel fluid flow arrangement provides a high temperature differential when the nitrogen and the coolant meet at coolant inlet which allows for a high rate-of heat-transfer-while the counter flow relationship in the inner coil provides an average temperature differential with the nitrogen as it exits the fourth chamber. In addition, there are spiral fins positioned between the helical tubes of the inner and outer coils in the fourth chamber 134 to increase the heat transfer between the tube fluid and the chamber fluid and ensure a chamber fluid flow following the tube pattern throughout the fourth chamber 134.

The fifth chamber 138 and the third chamber 132 are in heat exchange relation with the coolant in the fourth chamber such that heat from the exhaust is transferred to the coolant and ultimately transferred through the coolant to the nitrogen in the fourth portion of the helical tube.

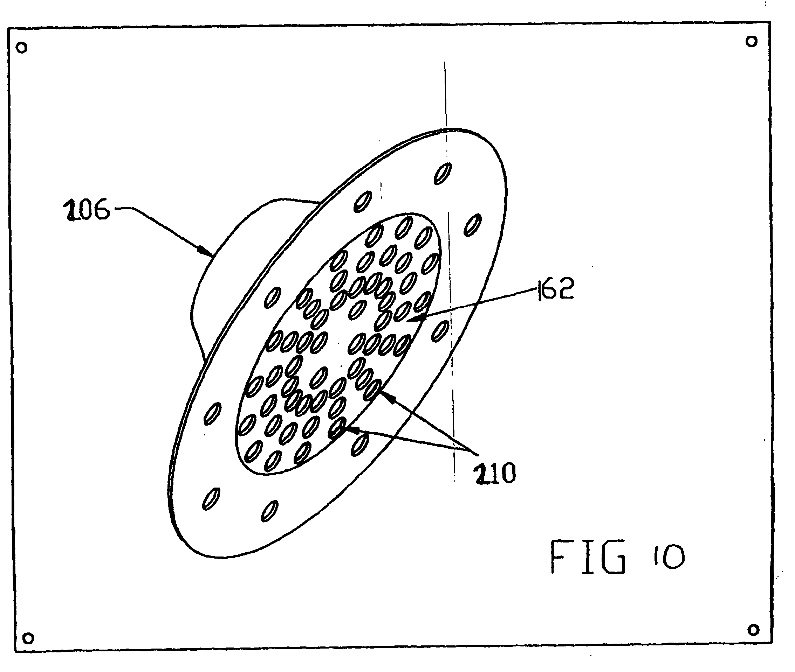

An inlet cone 206 is positioned in flow communication with the first end 112 of the heat exchanger 110. Shown in more detail in Figures 9 and 10, a diffuser 162 defining a plurality of openings 210 therein is positioned downstream of the inlet cone 206. Referring back to Figure 6, the inlet cone 206 also has a fluid inlet 158 for allowing the passage of cryogenic fluids from pumps or other devices that are normally vented to atmosphere.

It is important to note that the fluid flows through the individual chambers may be changed depending on the engine used, the hydraulic system used, and the flow volume and/or the pressure of the fluids. For example, the coolant flow may be through the second chamber instead of the fourth chamber.

Each chamber preferably includes a spiral fin that is positioned between the turns of at least some of the helical tubes to direct fluid flows and maximize the surface area and contact time of the tubes exposed to the fluids. The spiral fins are preferably made from stainless steel.

The inner wall of the first chamber 126 can be made from a heat transfer material such as brass, stainless steel, aluminum or copper, most preferably, stainless steel. The walls of the second, third and fourth chambers may also be made from a heat transfer material such as stainless steel, copper, brass, aluminum or mixtures thereof, preferably stainless steel, to maximize the radiant heat transfer between the exhaust, the hydraulic fluids, the coolant, and the tube fluid.

Figure 8 is a schematic of a system using the heat exchanger of one embodiment of the present invention. A triplex nitrogen pump 174 is used to send nitrogen from a nitrogen source 170 through conduit 172 to the heat exchanger 110. The pump 174 is driven by a hydraulic motor 186. The engine 176 drives the hydraulic pump 182 which supplies hydraulic fluid to motor 186 and other hydraulic motors in the system. The coolant fluid from the engine 176 is pumped into the heat exchanger 110 through a coolant pump 178 and conduit 180. The case drain and return hydraulic fluid from a hydraulic pump 182, coolant pump 178 and hydraulic motor 186 are sent to the heat exchanger 110 through via conduit 184 and exit the heat exchanger through conduit 202 to a hydraulic fluid source 190. Main hydraulic fluid from hydraulic pump 182, hydraulic actuated motor 186 is transferred to heat exchanger 110 through conduit 188 and returns to the hydraulic pump 182 through conduit 189 which completes a closed loop between hydraulic motor 186 and hydraulic pump 182. The hydraulic pump 182 is connected to a hydraulic fluid source 190 via conduit 192. The engine exhaust is transferred to the heat exchanger 110 through conduit 194 and exits the heat exchanger through conduit 196. Once the coolant exits the heat exchanger 110, it is transferred to either the engine radiator 198 or to the water pump in the engine 176. The coolant flow flows from the heat exchanger 110 through conduit 204 to a thermostatic valve 200 for regulating flow of the coolant, so that if the coolant temperature is too high the coolant is transferred to the engine radiator 198.

It is desirable for certain applications that the nitrogen be within a certain temperature range. In order to achieve a certain temperature range, a self-controlled tempering valve connected to a nitrogen source may be used to add liquid nitrogen to the nitrogen gas exiting the system if the temperature is too high.

Figures 9 and 10 are a perspective view of the inlet cone 206 and diffuser 162 of the present invention. The cone 206 is attached, typically with bolts, to the first end of the heat exchanger, in communication with a pipe for receiving the exhaust flow from an engine. The cone 206 has a diffuser 162 which consists of a generally flat plate defining holes 210 therethrough. The diffuser 162 and cone 206 act to reduce engine noise as the exhaust passed through the inlet cone and into the heat exchanger.

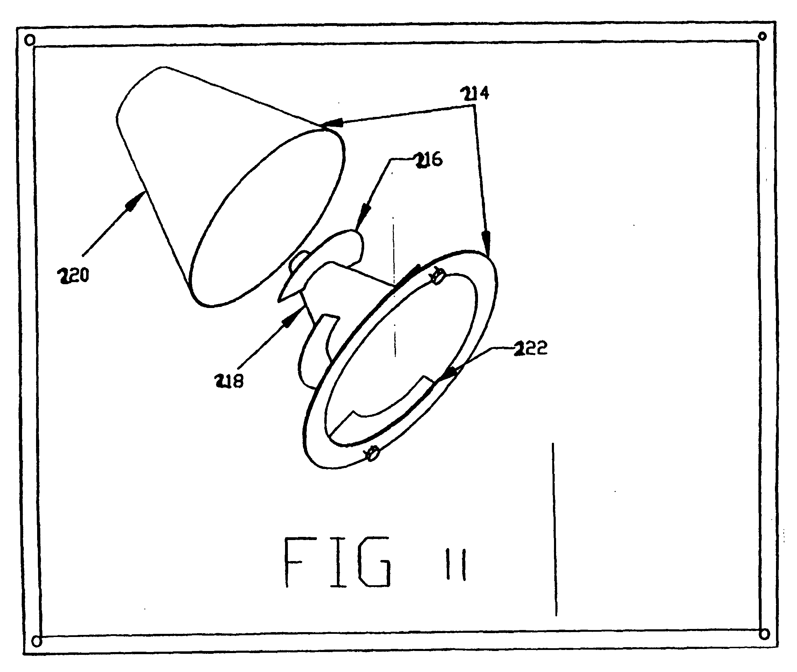

Figure 11 is an exploded view of an exit cone 214 that is attached to the second end 114 of the heat exchanger. The exit cone 214 comprises an inner cone 218 and an outer cone 220. The inner cone 218 has a spiral fin 216 positioned between the inner and outer cones. A diffuser 162 like that described above or preferably a flame trap metal mesh screen 234 may be placed upstream of the exit cone 214. The exhaust exits the third and fifth chambers and enters the exit cone 214 through opening 222 wherein it is forced by the spiral fin 216 to travel around the inner cone causing the exhaust to move in a centrifugal pattern, which reduces any remaining sparks in the exhaust flow.

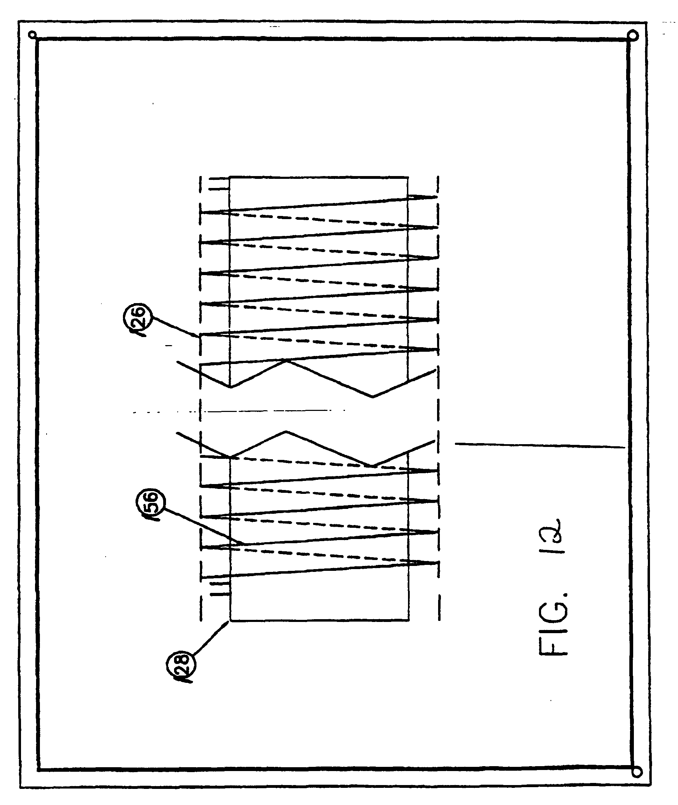

Figure 12 is a schematic view of the spiral fins used in the present invention. For clarity, the first chamber 126 is shown in dotted lines and the helical tube has been removed. The fins 156 are positioned around the outside of the second chamber 128 for directing the fluid flow through the first chamber so that the fluid contacts the maximum surface area of the helical tube passing through the first chamber 126, thus increasing the heat transfer efficiency of the system, through maximizing exposure time and surface contact area. Spiral fins are preferably positioned in the first, second and fourth chambers, however it possible to position spiral fins in the third chamber as well.

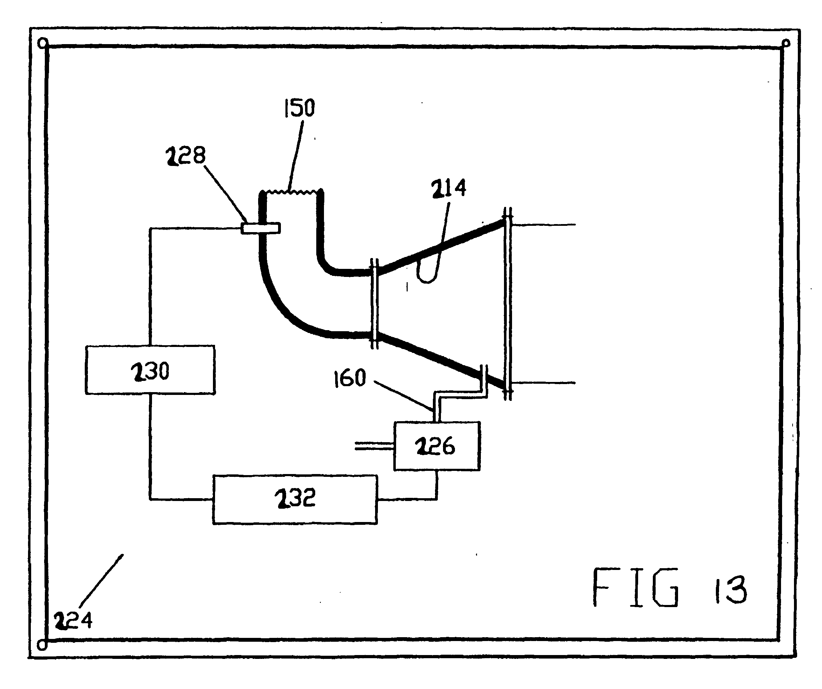

Figure 13 is a schematic view of a control system 224. The control system 224 has an automated proportional valve 226, such as a solenoid valve, a pyrometer 228, an electric controller 230 and a electrical valve actuator 232. The pyrometer 228 senses the exhaust temperature, sending signals to the controller 230 which in turn sends a signal to the electrical valve actuator 232 increasing or decreasing the amount of liquid nitrogen flowing into the exhaust stream through fluid line 160 by opening and closing the solenoid valve 226. Thus adjusting the exhaust temperature exiting the heat exchanger to the atmosphere.

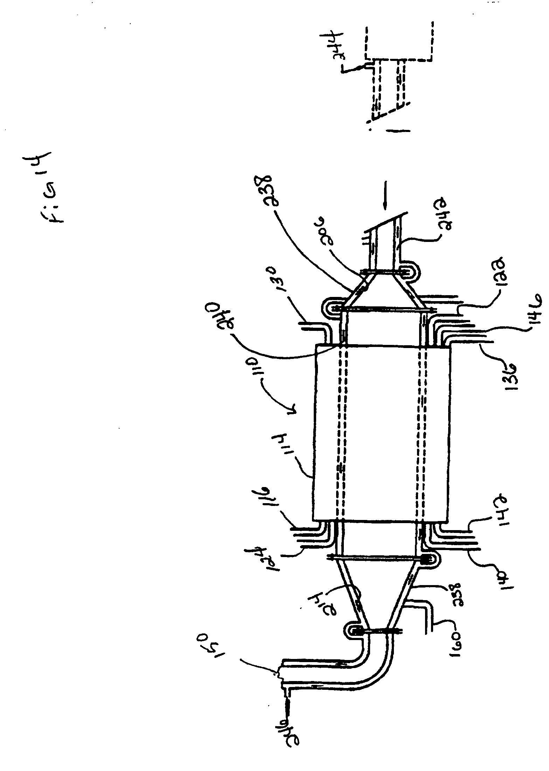

Figure 14 is a perspective view of heat exchanger 110 similar to the one shown in Figure 6, where like parts have the same number. The heat exchanger includes an outer casing 238 that surrounds the exhaust inlet 148, exhaust outlet 150, the inlet and outlet cones 206 and 214, as well as the exhaust tube 240 positioned inside the heat exchanger 110. The outer casing 238 forms a passage 242 between the casing 238 and the parts listed above. Engine coolant is directed into the passage 242 through inlet 244 and exits the passage 242 through outlet 246. The coolant maintains the outer exposed surfaces of the heat exchanger in a temperature range of from 160 to 180°F. Maintaining temperatures in this range is useful for operations that require low surface temperatures, such as when flammable materials are used.

While the foregoing is directed to the preferred embodiment of the present invention, other and further embodiments of the invention may be devised without departing from the basic scope thereof, and the scope thereof is determined by the claims which follow.

## Claims

1. A heat exchanger comprising a plurality of co-axially aligned chambers (26, 28, 30; 126, 128, 132, 134, 138) positioned one inside the other for providing radial, thermal heat transfer between a plurality of separately contained fluids, and a helical tube (20, 118), wherein the helical tube has an inlet (16, 116) and an outlet (22, 122) **characterised in that** the tube (20, 121) has at least one portion positioned within at least one of the chambers and another portion positioned within another of the chambers.

2. The heat exchanger of Claim 2 wherein the plurality of chambers includes a first chamber (126) having at least one inlet (136), a second chamber (128) disposed in the first chamber, wherein the second chamber has at least one inlet (142), a third chamber (132) disposed in the second chamber, wherein the third chamber has at least one inlet, a fourth chamber (134) disposed in the third chamber, wherein the fourth chamber has at least one inlet and a fifth chamber (138) disposed in the fourth chamber, wherein the fifth chamber has at least one inlet.

3. The heat exchanger of Claim 2 wherein the helical tube (118) has a first portion (120) disposed in the first chamber (126), a second portion (121) disposed in the second chamber, a third portion (123) disposed in the third chamber and a fourth portion (144) disposed in the fourth chamber (134).

4. The heat exchanger of Claim 3 wherein the helical tube (118) has a tube fluid flow therethrough, the first chamber (126) has a first fluid flow therethrough, the second chamber (128) has a second fluid flow therethrough, the third chamber (132) and the fifth chamber (138) having a third fluid flow therethrough, and the fourth chamber (134) has a fourth fluid flow therethrough.

5. A heat exchanger according to Claim 1 comprising a first chamber (126) having at least one inlet, a second chamber (128) having at least one inlet, wherein the second chamber is positioned inside the first chamber, a third chamber (132) having at least one inlet, wherein the third chamber (132) is positioned inside the second chamber (128), a fourth chamber (134) having at least one inlet, wherein the fourth chamber (134) is positioned inside the third chamber (132), and a helical tube (118) having an inlet, wherein at least a portion of the helical tube is disposed in the first, second, third and fourth chambers, the helical tube thus having a first portion (120) disposed within the first chamber, a second portion (121) disposed within the second chamber, a third portion (123) disposed within the third chamber and a fourth chamber, wherein the first, second, third and fourth chambers are in co-axial alignment.

6. The heat exchanger of Claim 5 wherein the helical tube (118) has a tube fluid flow therethrough, the first chamber (126) has a first fluid flow therethrough the second chamber (125) has a second fluid flow therethrough, the third chamber (132) has at least a first portion of a third fluid flow therethrough, and the fourth chamber (134) has a fourth fluid flow therethrough, wherein the first, second, third, fourth and tube fluid flows do not mix.

7. The heat exchanger of Claim 5 or 6 further comprising a fifth chamber (138) having at least one inlet, wherein the fifth chamber is positioned inside the fourth chamber (132), wherein the fifth chamber (138) has a second portion of the third fluid flow therethrough.

8. The heat exchange of Claim 4 or Claim 6 wherein the tube fluid flow through the first portion (120) is in a counter-flow arrangement with the first fluid flow in the first chamber (126).

9. The heat exchanger of Claim 4, 6 or 8 wherein the tube fluid flow through the second portion (121) is in a counter-flow arrangement with the second fluid flow in the second chamber (128).

10. The heat exchanger of Claim 4, 6, 8 or 9 wherein the tube fluid flow through the third portion (123) is in a counter-flow arrangement with the third fluid flow in the third chamber (132).

11. The heat exchanger of Claim 4 or Claim 6, or any one of Claim 8 to 10 wherein the fourth portion (133) of the helical tube forms an inner coil and an outer coil (135, 137), wherein the tube fluid flow through the inner coil (135) is in a counter-flow relationship with the fourth fluid flow and the tube fluid flow through the outer coil (137) is in a parallel flow relationship with the fourth fluid flow.

12. The heat exchanger of any one of the preceding Claims further comprising at least one spiral fin (156) positioned between the turns of a portion of the helical tube.

13. The heat exchanger of Claim 2 or Claim 5, or any Claim dependent thereon further comprising a spiral fin (156) positioned inside the fourth chamber, wherein at least some of the turns of the spiral fin are positioned between at least some of the turns of the fourth portion of the helical tube.

14. The heat exchanger of any one of the preceding Claims further comprising an inlet cone (206) in flow communication with one end of the heat exchanger and a diffuser (162) defining a plurality of openings (210) therein positioned downstream of the inlet cone.

15. The heat exchanger of Claim 14 wherein the inlet cone (206) further comprises an inside surface and an outside surface, wherein the outside surface is coated with an insulating material (236), so that the outside surface of the inlet cone has a lower temperature than the inside surface of the inlet cone.

16. The heat exchanger of Claim 14 or 15 further comprising an exit cone (214) in flow communication with the opposite end of the heat exchanger, wherein the exit cone comprises an inlet and an outlet, an inner cone (218) and an outer cone (220), wherein the inner cone has a spiral fin (216) extending between the inner cone to the outer cone to form a spiral flow path between the inner cone and the outer cone.

17. The heat exchanger of Claim 16 wherein the exit cone (214) further comprises an inside surface and an outside surface, wherein the outside surface is coated with an insulating material (236), so that the outside surface of the exit cone has a lower temperature than the inside surface of the exit cone.

18. The heat exchanger of Claim 4 or 6, or any Claim dependent thereon further comprising a flame retarding element (234) positioned in flow communication with the third flow exiting the heat exchanger.

19. The heat exchanger of Claim 18, wherein the flame retarding element is a mesh screen (234).

20. The heat exchanger of Claim 6 or any Claim thereon wherein the first fluid flow is hydraulic fluid, the second fluid flow is case hydraulic fluid, the third fluid flow is exhaust, the fourth fluid flow is a coolant and wherein liquid nitrogen flows through the helical tube.

## Patentansprüche

1. Wärmetauscher umfassend eine Vielzahl von koaxial ausgerichteten Kammern (26, 28, 30; 126, 128, 132, 134, 138), die zum Liefern eines radialen, thermischen Wärmeübergangs zwischen einer Vielzahl von separat eingeschlossenen Fluiden ineinander positioniert sind, und ein sprialförmiges Rohr (20, 118), wobei das spiralförmige Rohr einen Einlaß (16, 116) und einen Auslaß (22, 122) aufweist, **dadurch gekennzeichnet, daß** das Rohr (20, 121) mindestens einen Teil, der in mindestens einer der Kammern positioniert ist, und einen weiteren Teil aufweist, der in einer anderen von den Kammern positioniert ist.

2. Wärmetauscher nach Anspruch 1, **dadurch gekennzeichnet, daß** die Vielzahl von Kammern eine erste Kammer (126) mit mindestens einem Einlaß (136), eine zweite Kammer (128), die in der ersten Kammer angeordnet ist, wobei die zweite Kammer mindestens einen Einlaß (142) aufweist, eine dritte Kammer (132), die in der zweiten Kammer angeordnet ist, wobei die dritte Kammer mindestens einen Einlaß aufweist, eine vierte Kammer (134), die in der dritten Kammer angeordnet ist, wobei die vierte Kammer mindestens einen Einlaß aufweist, und eine fünfte Kammer (138) enthält, die in der vierten Kammer angeordnet ist, wobei die fünfte Kammer mindestens einen Einlaß aufweist.

3. Wärmetauscher nach Anspruch 2, **dadurch gekennzeichnet, daß** das spiralförmige Rohr (118) einen ersten Teil (120), der in der ersten Kammer (126) angeordnet ist, einen zweiten Teil (121), der in der zweiten Kammer angeordnet ist, einen dritten Teil (123), der in der dritten Kammer angeordnet ist, und einen vierten Teil (144) aufweist, der in der vierten Kammer (134) angeordnet ist.

4. Wärmetauscher nach Anspruch 3, **dadurch gekennzeichnet, daß** das spiralförmige Rohr (118) eine dort hindurchgehende Rohrfluidströmung aufweist, die erste Kammer (126) eine dort hindurchgehende erste Fluidströmung aufweist, die zweite Kammer (128) eine dort hindurchgehende zweite Fluidströmung aufweist, wobei die dritte Kammer (132) und die fünfte Kammer (138) eine dort hindurchgehende dritte Fluidströmung aufweisen, und die vierte Kammer (134) eine dort hindurchgehende vierte Fluidströmung aufweist.

5. Wärmetauscher nach Anspruch 1, umfassend eine erste Kammer (126) mit mindestens einem Einlaß, eine zweite Kammer (128) mit mindestens einem Einlaß, wobei die zweite Kammer in der ersten Kammer positioniert ist, eine dritte Kammer (132) mit mindestens einem Einlaß, wobei die dritte Kammer (132) in der zweiten Kammer (128) positioniert ist, eine vierte Kammer (134), mit mindestens einem Einlaß, wobei die vierte Kammer (134) in der dritten Kammer (132) positioniert ist, und ein spiralförmiges Rohr (118) mit einem Einlaß, wobei mindestens ein Teil des spiralförmigen Rohres in den ersten, zweiten, dritten und vierten Kammern angeordnet ist, wobei das spiralförmige Rohr somit einen in der ersten Kammer angeordneten ersten Teil (120), einen in der zweiten Kammer angeordneten zweiten Teil (121) und einen in der dritten Kammer und der vierten Kammer angeordneten dritten Teil (123) aufweist, wobei die ersten, zweiten, dritten und vierten Kammern koaxial ausgerichtet sind.

6. Wärmetauscher nach Anspruch 5, **dadurch gekennzeichnet, daß** das spiralförmige Rohr (118) eine dort hindurchgehende Rohrfluidströmung aufweist, die erste Kammer (126) eine dort hindurchgehende erste Fluidströmung aufweist, die zweite Kammer (125) eine dort hindurchgehende zweite Fluidströmung aufweist, die dritte Kammer (132) mindestens einen ersten Teil einer dort hindurchgehenden dritten Fluidströmung aufweist und die vierte Kammer (134) eine dort hindurchgehende vierte Fluidströmung aufweist, wobei sich die ersten, zweiten, dritten, vierten und Rohrfluidströmungen nicht mischen.

7. Wärmetauscher nach Anspruch 5 oder 6, ferner umfassend eine fünfte Kammer (138) mit mindestens einem Einlaß, wobei die fünfte Kammer in der vierten Kammer (132) positioniert ist, wobei die fünfte Kammer (138) einen zweiten Teil der dort hindurchgehenden dritten Fluidströmung aufweist.

8. Wärmetauscher nach Anspruch 4 oder Anspruch 6, **dadurch gekennzeichnet, daß** sich die Rohrfluidströmung durch den ersten Teil (120) in einer Gegenstromanordnung mit der ersten Fluidströmung in der ersten Kammer (126) befindet.

9. Wärmetauscher nach Anspruch 4, 6 oder 8, **dadurch gekennzeichnet, daß** sich die Rohrfluidströmung durch den zweiten Teil (121) in einer Gegenstromanordnung mit der zweiten Fluidströmung in der zweiten Kammer (128) befindet.

10. Wärmetauscher nach Anspruch 4, 6, 8 oder 9, **dadurch gekennzeichnet, daß** sich die Rohrfluidströmung durch den dritten Teil (123) in einer Gegenstromanordnung mit der dritten Fluidströmung in der dritten Kammer (132) befindet.

11. Wärmetauscher nach Anspruch 4 oder Anspruch 6 oder einem der Ansprüche 8 bis 10, **dadurch gekennzeichnet, daß** der vierte Bereich (133) des spiralförmigen Rohres eine innere Wicklung und eine äußere Wicklung (135, 137) bildet, daß sich die Rohrfluidströmung durch die innere Wicklung (135) in einer Gegenstrombeziehung mit der vierten Fluidströmung befindet und sich die Rohrfluidströmung durch die äußere Wicklung (137) in einer parallelen Strömungsbeziehung mit der vierten Fluidströmung befindet.

12. Wärmetauscher nach einem der vorangehenden Ansprüche, ferner umfassend mindestens ein spiralförmiges Leitblech (156), das zwischen den Windungen eines Teils des spiralförmigen Rohres positioniert ist.

13. Wärmetauscher nach Anspruch 2 oder Anspruch 5 oder irgendeinem davon abhängigen Anspruch, ferner umfassend ein spiralförmiges Leitblech (156), das in der vierten Kammer positioniert ist, wobei mindestens einige der Windungen des spiralförmigen Leitbleches zwischen mindestens einigen der Windungen des vierten Teils des spiralförmigen Rohres positioniert sind.

14. Wärmetauscher nach einem der vorangehenden Ansprüche, ferner umfassend einen Einlaßkonus (206) in Fluidverbindung mit einem Ende des Wärmetauschers und einen Verteiler (162), der darin eine Vielzahl von Öffnungen (210) definiert und stromabwärts vom Einlaßkonus positioniert ist.

15. Wärmetauscher nach Anspruch 14, **dadurch gekennzeichnet, daß** der Einlaßkonus (206) außerdem eine Innenfläche und eine Außepfläche aufweist, daß die Außenfläche mit einem Isoliermaterial (236) beschichtet ist, so daß die Außenfläche des Einlaßkonus eine niedrigere Temperatur als die Innenfläche des Einlaßkonus aufweist.

16. Wärmetauscher nach Anspruch 14 oder 15, ferner umfassend einen Auslaßkonus (214) in Fluidverbindung mit dem gegenüberliegenden Ende des Wärmetauschers, wobei der Auslaßkonus einen Einlaß und einen Auslaß, einen inneren Konus (218) und einen äußeren Konus (220) aufweist, wobei der innere Konus ein spiralförmiges Leitblech (216) aufweist, das sich zwischen dem inneren Konus zum äußeren Konus zur Bildung eines spiralförmigen Strömungsweges zwischen dem inneren Konus und dem äußeren Konus erstreckt.

17. Wärmetauscher nach Anspruch 16, **dadurch gekennzeichnet, daß** der Auslaßkonus (214) außerdem eine Innenfläche und eine Außenfläche aufweist, wobei die Außenfläche mit einem Isoliermaterial (236) beschichtet ist, so daß die Außenfläche des Auslaßkonus eine niedrigere Temperatur als die Innenfläche des Austrittskonus aufweist.

18. Wärmetauscher nach Anspruch 4 oder 6 oder irgendeinem davon abhängigen Anspruch, ferner umfassend ein Flammenschutzelement (234), das in Fluidverbindung mit der dem Wärmetauscher verlassenden dritten Strömung positioniert ist.

19. Wärmetauscher nach Anspruch 18, **dadurch gekennzeichnet, daß** das Flammenschutzelement ein Maschensieb (234) ist.

20. Wärmetauscher nach Anspruch 6 oder irgendeinem davon abhängigen Anspruch, **dadurch gekennzeichnet, daß** die erste Fluidströmung Hydraulikflüssigkeit ist, die zweite Fluidströmung Gehäusehydraulikflüssigkeit ist, die dritte Fluidströmung Abgas ist, die vierte Fluidströmung ein Kühlmittel ist und das flüssige Stickstoff durch das spiralförmige Rohr strömt.

## Revendications

1. Echangeur de chaleur comprenant une pluralité de chambres alignées de manière coaxiale (26, 28, 30 ; 126, 128, 132, 134, 138) positionnées l'une dans l'autre afin de fournir un transfert de chaleur thermique radial entre une pluralité de fluides contenus séparément, et un tube hélicoïdal (20, 118), dans lequel le tube hélicoïdal présente un orifice d'admission (16, 116) et un orifice de sortie (22, 122) **caractérisé en ce que** le tube (20, 118) présente au moins une partie positionnée à l'intérieur d'au moins l'une des chambres et une autre partie positionnée dans l'autre des chambres.

2. Echangeur de chaleur selon la revendication 1, dans lequel la pluralité de chambres inclut une première chambre (126) qui présente au moins un orifice d'admission (136), une deuxième chambre (128) disposée dans la première chambre, dans lequel la deuxième chambre présente au moins un orifice d'admission (142), une troisième chambre (132) disposée dans la deuxième chambre, dans lequel la troisième chambre présente au moins un orifice d'admission, une quatrième chambre (134) disposée dans la troisième chambre, dans lequel la quatrième chambre présente au moins un orifice d'admission et une cinquième chambre (138) disposée dans la quatrième chambre, dans lequel la cinquième chambre présente au moins un orifice d'admission.

3. Echangeur de chaleur selon la revendication 2, dans lequel le tube hélicoïdal (118) présente une première partie (120) disposée dans la première chambre (126), une seconde partie (121) disposée dans la deuxième chambre, une troisième partie (123) disposée dans la troisième chambre et une quatrième partie (144) disposée dans la quatrième chambre (134).

4. Echangeur de chaleur selon la revendication 3, dans lequel le tube hélicoïdal (118) présente un écoulement de fluide de tube à travers celui-ci, la première chambre (126) présente un écoulement de fluide à travers celle-ci, la deuxième chambre (128) présente un écoulement de fluide à travers celle-ci, la troisième chambre (132) et la cinquième chambre (138) présentant un troisième écoulement de fluide à travers celles-ci, et la quatrième chambre (134) présente un quatrième écoulement de fluide à travers celle-ci.

5. Echangeur de chaleur selon la revendication 1 comprenant une première chambre (126) présentant au moins un orifice d'admission, une deuxième chambre (128) présentant au moins un orifice d'admission, dans lequel la deuxième chambre est positionnée à l'intérieur de la première chambre, une troisième chambre (132) présentant au moins un orifice d'admission, dans lequel la troisième chambre (132) est positionnée à l'intérieur de la deuxième chambre (128), une quatrième chambre (134) présentant au moins un orifice d'admission, dans lequel la quatrième chambre (134) est positionnée à l'intérieur de la troisième chambre (132), et un tube hélicoïdal (118) présentant un orifice d'admission, dans lequel au moins une partie du tube hélicoïdal est disposée dans les première, deuxième, troisième et quatrième chambres, le tube hélicoïdal présentant ainsi une première partie (120) disposée à l'intérieur de la première chambre, une deuxième partie (121) disposée à l'intérieur de la deuxième chambre, une troisième partie (123) disposée à l'intérieur de la troisième chambre et une quatrième chambre, dans lequel les première, deuxième, troisième et quatrième chambres sont en alignement coaxial.

6. Echangeur de chaleur selon la revendication 5, dans lequel le tube hélicoïdal (118) présente un écoulement de fluide de tube à travers celui-ci, la première chambre (126) présente un premier écoulement de fluide à travers celle-ci, la deuxième chambre (125) présente un deuxième écoulement de fluide à travers celle-ci, la troisième chambre (132) présente au moins une première partie d'un troisième écoulement de fluide à travers celle-ci et la quatrième chambre (134) présente au moins un quatrième écoulement de fluide à travers celle-ci, dans lequel l'écoulement de fluide des première, deuxième, troisième, quatrième chambres et du tube ne se mélangent pas.

7. Echangeur de chaleur selon la revendication 5 ou 6, comprenant une cinquième chambre (138) présentant au moins un orifice d'admission, dans lequel la cinquième chambre est positionnée à l'intérieur de la quatrième chambre (132), dans lequel la cinquième chambre (138) présente une seconde partie du troisième écoulement de fluide à travers celle-ci.

8. Echangeur de chaleur selon la revendication 4 ou la revendication 6, dans lequel l'écoulement de fluide de tube à travers la première partie (120) se trouve dans un agencement à contre-courant avec le premier écoulement de fluide dans la première chambre (126).

9. Echangeur de chaleur selon la revendication 4, 6, ou 8, dans lequel l'écoulement du fluide de tube à travers la deuxième partie (121) se trouve dans un agencement à contre-courant avec le deuxième écoulement de fluide dans la deuxième chambre (128).

10. Echangeur de chaleur selon la revendication 4, 6, 8, ou 9 dans lequel l'écoulement de fluide de tube à travers la troisième partie (123) se trouve dans un agencement à contre-courant avec le troisième écoulement de fluide dans la troisième chambre (132).

11. Echangeur de chaleur selon la revendication 4 ou la revendication 6, ou l'une quelconque des revendications 8 à 10, dans lequel la quatrième partie (133) du tube hélicoïdal forme un serpentin interne et un serpentin externe (135, 137), dans lequel l'écoulement de fluide de tube à travers le serpentin interne (135) se trouve en une relation de contre-courant avec le quatrième écoulement de fluide et l'écoulement de fluide de tube à travers le serpentin externe (137) se trouve dans une relation d'écoulement parallèle avec le quatrième écoulement de fluide.

12. Echangeur de chaleur selon l'une quelconque des revendications précédentes, comprenant en outre au moins une ailette en spirale (156) positionnée entre les spires d'une partie du tube hélicoïdal.

13. Echangeur de chaleur selon la revendication 2 ou la revendication 5, ou selon toute revendication dépendante de celles-ci, comprenant en outre une ailette en spirale (156) positionnée à l'intérieur de la quatrième chambre, dans lequel au moins certaines des spires de l'ailette en spirale sont positionnées entre au moins certaines des spires de la quatrième partie du tube hélicoïdal.

14. Echangeur de chaleur selon l'une quelconque des revendications précédentes, comprenant en outre un cône d'admission (206) en communication fluidique avec une extrémité de l'échangeur de chaleur et un diffuseur (162) définissant une pluralité d'ouvertures (210) positionnées à l'intérieur de celui-ci, en aval du cône d'admission.

15. Echangeur de chaleur selon la revendication 14, dans lequel le cône d'admission (206) comprend en outre une surface intérieure et une surface extérieure, dans lequel la surface extérieure est revêtue d'un matériau isolant (236) de telle sorte que la surface extérieure du cône d'admission présente une température inférieure à celle de la surface intérieure du cône d'admission.

16. Echangeur de chaleur selon la revendication 14 ou 15, comprenant en outre, un cône de sortie (214) en communication fluidique avec l'extrémité opposée de l'échangeur de chaleur, dans lequel le cône de sortie comprend un orifice d'admission et un orifice de sortie, un cône interne (218) et un cône externe (220), dans lequel le cône interne présente une ailette en spirale (216) qui s'étend entre le cône interne et le cône externe afin de former un trajet d'écoulement en spirale entre le cône interne et le cône externe.

17. Echangeur de chaleur selon la revendication 16, dans lequel le cône de sortie (214) comprend en outre une surface intérieure et une surface extérieure, dans lequel la surface extérieure est revêtue d'un matériau isolant (236), de telle sorte que la surface externe du cône de sortie présente une température inférieure à celle de la surface interne du cône de sortie.

18. Echangeur de chaleur selon la revendication 4 ou 6, ou toute autre revendication dépendante de celles-ci, comprenant en outre un élément ignifugé (234) positionné en communication fluidique avec le troisième écoulement qui sort de l'échangeur de chaleur.

19. Echangeur de chaleur selon la revendication 18, dans lequel l'élément ignifugé est un tamis à mailles (234).

20. Echangeur de chaleur selon la revendication 6, ou toute autre revendication dépendante de celle-ci, dans lequel le premier écoulement de fluide est un fluide hydraulique, le deuxième écoulement de fluide est un fluide hydraulique de carter, le troisième écoulement de fluide est un échappement, le quatrième écoulement de fluide est un réfrigérant, et dans lequel de l'azote liquide s'écoule à travers le tube hélicoïdal.
